# EUROPEAN PATENT SPECIFICATION

(11) **EP 3 411 612 B1**
(45) Date of publication and mention of the grant of the patent: **21.04.2021**
(21) Application number: 17746674.5
(22) Date of filing: 01.02.2017
(51) Int. Cl.: F16K 7/06, F16K 7/04, B23Q 11/10, F16K 31/524

(54) **FLOW CONTROL VALVE**
STRÖMUNGSREGELVENTIL
SOUPAPE DE RÉGULATION DE DÉBIT

(30) Priority: 01.02.2016 US 201662289692 P
(43) Date of publication of application: 12.12.2018
(73) Proprietor: WRI Holdings Ltd., Vancouver, British Columbia V5W 2A6 (CA)
(72) Inventor: MCNAMARA, David S., Vancouver British Columbia V5W 2A6 (CA)
(74) Representative: Inchingalo, Simona
(86) International application number: PCT/CA2017/050115
(87) International publication number: WO 2017/132764

(56) References cited:
- WO-A1-00/27539
- DE-A1-102011 015 385
- GB-A- 1 402 266
- GB-A- 1 402 266
- US-A- 1 865 012
- US-A- 3 550 861
- US-A- 3 550 861
- US-A- 3 685 786
- US-A- 4 899 783
- US-A1- 2011 315 794
- US-A1- 2011 315 794
- US-A1- 2014 077 107
- US-B2- 8 118 057

## Description

### Technical Field

Some embodiments of the present invention relate to valves for controlling a flow of liquid. Some embodiments of the present invention pertain to valves that allow the rate of flow of a liquid through the valve to be controlled with a reasonably good level of precision. Some embodiments of the present invention pertain to methods of using a valve to control the rate of flow of a liquid through the valve.

### Background

Good control of the flow rate of a liquid through a valve is important in many settings. Such settings include a variety of industrial contexts, including for example the application of water as a cooling fluid and/or to reduce dust during the cutting or grinding of very hard materials, and also for example in medical contexts, research and analytical laboratories, hydraulic systems, fuel delivery, and so on.

For example, in one exemplary industrial application, when using tools to cut or grind very hard materials, water may be supplied between the cutting/grinding tool and the material being cut or ground. Providing water in this context can help to decrease the amount of dust released to the external environment in the course of the cutting/grinding process, and can help prevent the cutting/grinding tool from overheating and/or being damaged. Fine control of the amount of water supplied is important in this particular context because supplying too little water may result in the production of large amounts of dust and/or overheating or damage to the cutting/grinding tool. Supplying too much water can create a barrier between the cutting/grinding tool and the surface to be cut/ground, which may reduce the cutting speed and/or the level of cutting. Supplying too much water may also result in the location where cutting/grinding is taking place being flooded or becoming overly muddy or messy.

Existing flow control valves have limitations in providing desired degrees of flow control. For example, a ball valve has only ¼ turn between its fully closed and fully open positions. These valves are primarily designed for use in full open/full closed positions, and not for precision flow control. This limited range of adjustability makes fine adjustment of flow rate difficult. Needle valves are susceptible to clogging with material. Gate valves are often intended to move between fully open and fully closed positions when in use. Other valve designs may have other limitations. Document US 3550861 discloses a hose nozzle in which a dimensionally stable resilient tubular member is so disposed in a rigid tube that a plurality of circumferentially spaced balls may be moved radially to restrict the transverse interior cross section of the tubular member to such a degree as to control the rate of flow of fluid therethrough, as well as completely block the interior transverse cross section of the tubular member to prevent the flow of fluid longitudinally through the tubular member.

The foregoing examples of the related art and limitations related thereto are intended to be illustrative and not exclusive. Other limitations of the related art will become apparent to those of skill in the art upon a reading of the specification and a study of the drawings.

### Summary

The following embodiments and aspects thereof are described and illustrated in conjunction with systems, tools and methods which are meant to be exemplary and illustrative, not limiting in scope. In various embodiments, one or more of the above-described problems have been reduced or eliminated, while other embodiments are directed to other improvements.

A flow control valve according to the present invention is disclosed in claim 1.

In some embodiments, the seating ring comprises an angled surface that is angled inwardly and in the upstream direction from the inside surface of the central shaft that is in contact with the resilient tubular member to form a projection. A downstream tip of the resilient tubular member is engaged over the projection, to help resist deformation of the downstream tip of the resilient tubular member when the plurality of balls are moved radially inwardly.

In addition to the exemplary aspects and embodiments described above, further aspects and embodiments will become apparent by reference to the drawings and by study of the following detailed descriptions.

### Brief Description of the Drawings

Exemplary embodiments are illustrated in referenced figures of the drawings. It is intended that the embodiments and figures disclosed herein are to be considered illustrative rather than restrictive.

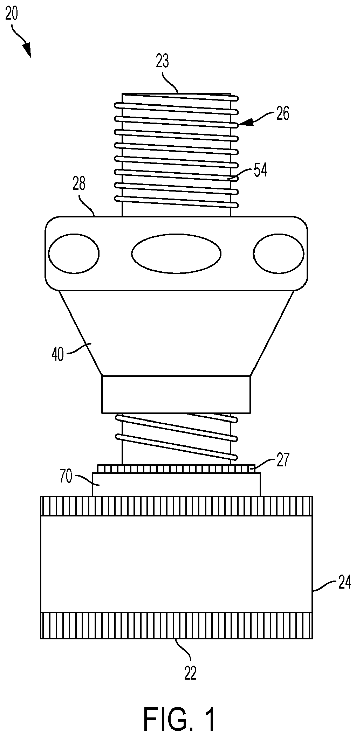

FIG. 1 shows a side view of a flow control valve according to one example embodiment.

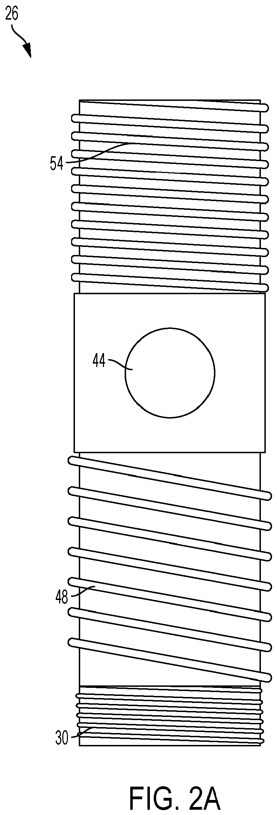

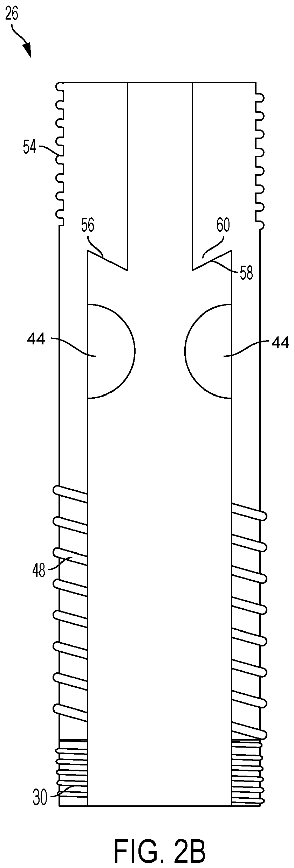

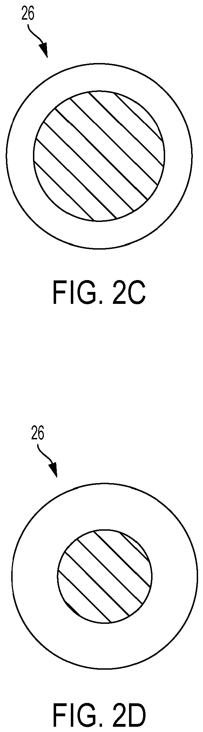

FIG. 2A shows a side view of a central shaft of a flow control valve according to the example embodiment shown in FIG. 1. FIG. 2B shows a partial cross-sectional view of the central shaft of FIG. 2A, with semi-circles indicating the approximate position of the inner portion of the balls within the central shaft, FIG. 2C shows a bottom view thereof, and FIG. 2D shows a top view thereof.

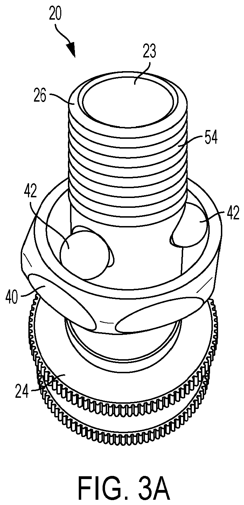

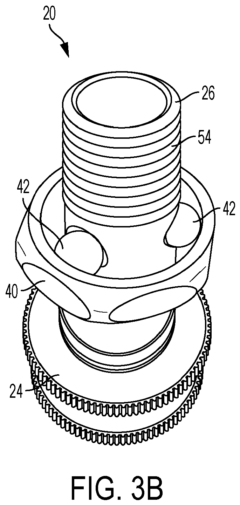

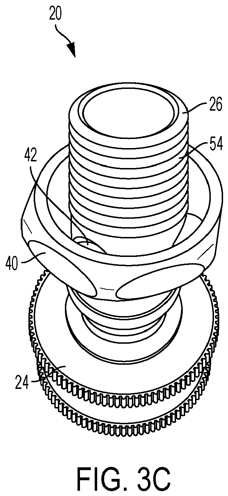

FIG. 3A shows a perspective view of a flow controller of one example, not part of the present invention, that does not have a seating ring for clarity, in an open position. FIG. 3B shows a perspective view of the flow controller of FIG. 3A in a partially open position. FIG. 3C is a perspective view of the flow controller of FIG. 3A in a fully closed position.

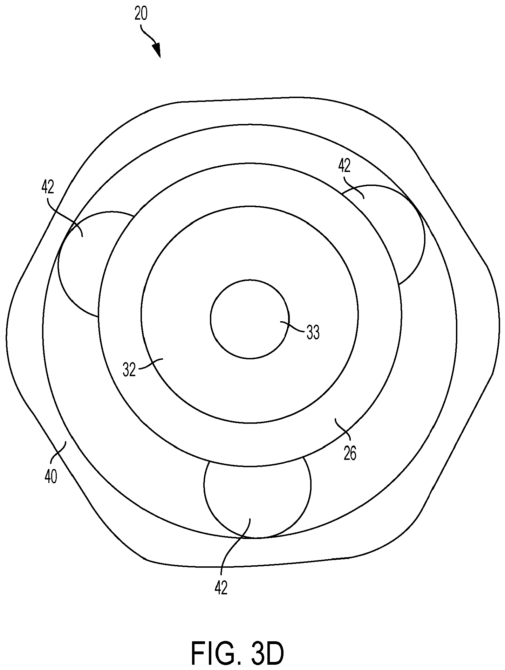

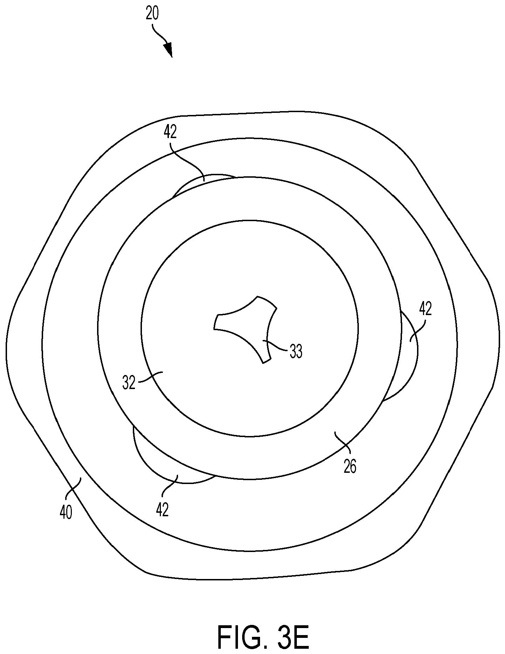

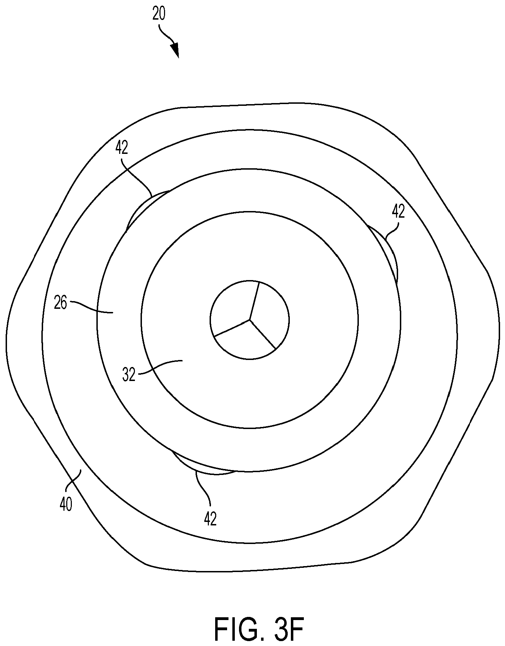

FIG. 3D shows a downstream end view of the example shown in FIG. 3A, with the flow controller in a fully open configuration. FIG. 3E shows a downstream end view of the example shown in FIG. 3A, with the flow controller in a partially open configuration. FIG. 3F shows a downstream end view of the example shown in FIG. 3A, with the flow controller in a fully closed configuration.

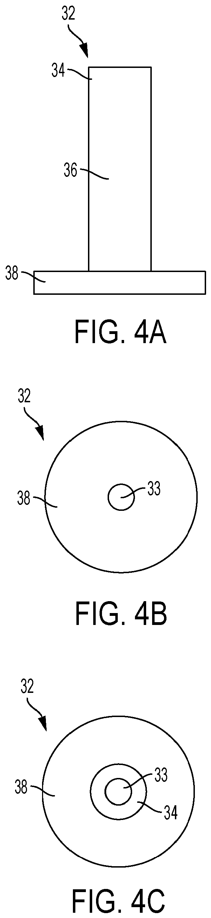

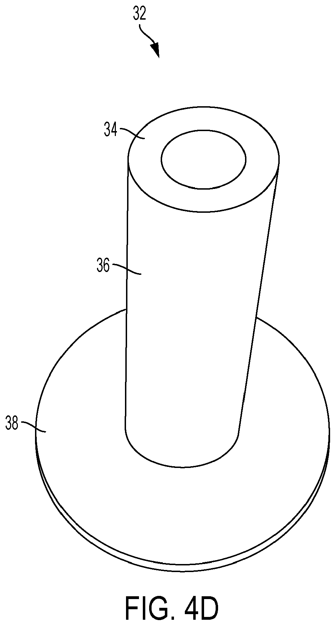

FIG. 4A shows a side view of a tubular member for use with one example embodiment. FIG. 4B shows a bottom view thereof, and FIG. 4C shows a top view thereof. FIG. 4D shows a perspective view of a further example of a tubular member for use with another example embodiment.

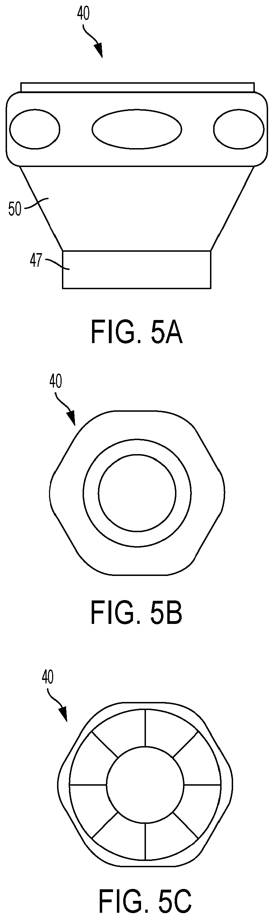

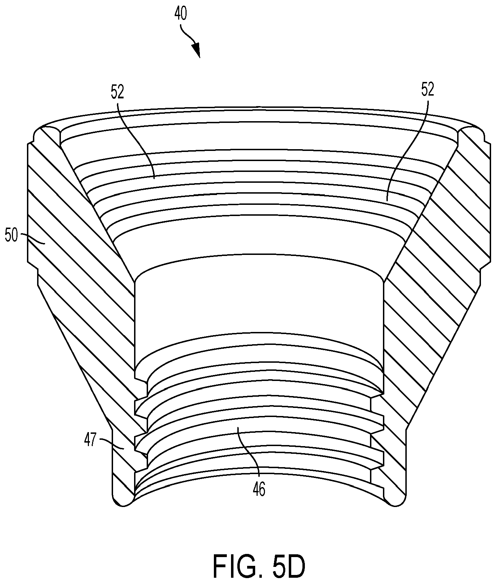

FIG. 5A shows a side view of a bell housing for use with one example embodiment. FIG. 5B shows a bottom view thereof, and FIG. 5C shows a top view thereof. FIG. 5D is a cross-sectional view of an example bell housing for use with another example embodiment.

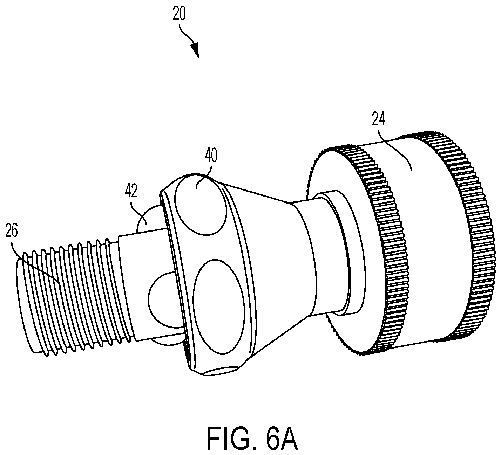

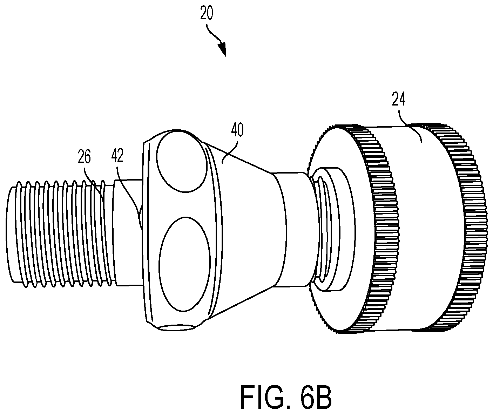

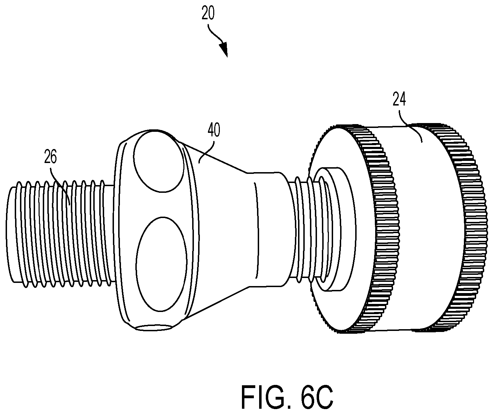

FIG. 6A is a side view of a flow control valve according to one example embodiment in an open configuration. FIG. 6B is a side view thereof showing the flow control valve in a partially closed configuration, and FIG. 6C is a side view thereof showing the flow control valve in a fully closed configuration.

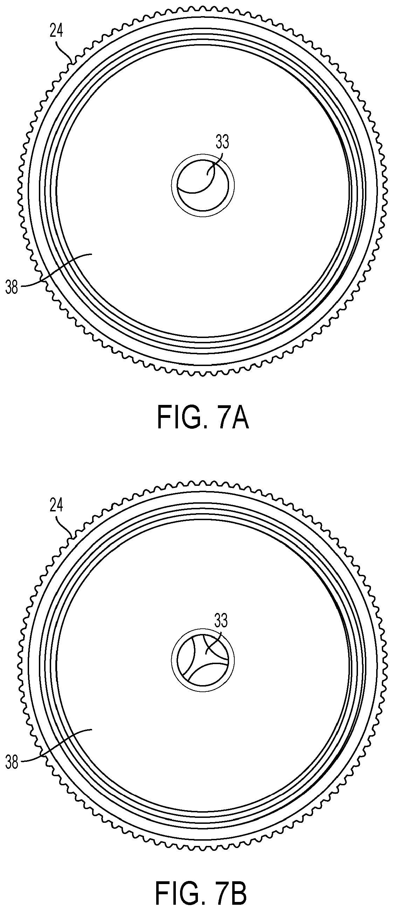

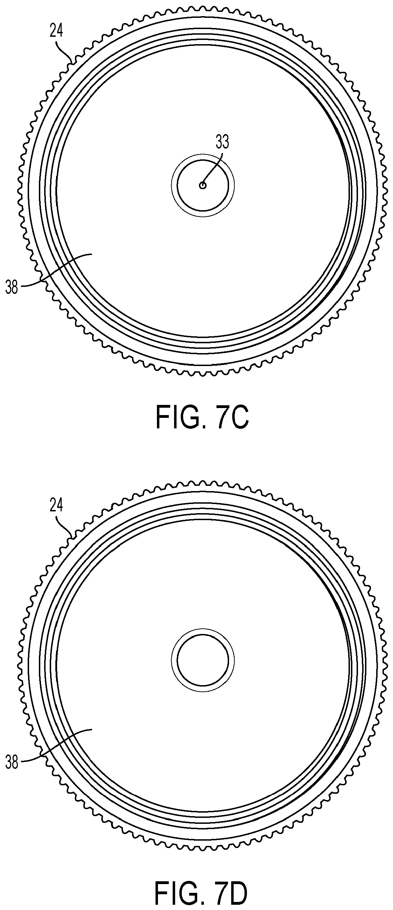

FIG. 7A shows an end view of an example embodiment of a flow control valve from the upstream end, with the flow control valve in an open configuration. FIG. 7B is a second end view thereof, with the flow control valve in a slightly closed configuration. FIG. 7C is a third end view thereof, with the flow control valve in an almost fully closed configuration. FIG. 7D is a fourth end view thereof, with the flow control valve in a fully closed configuration.

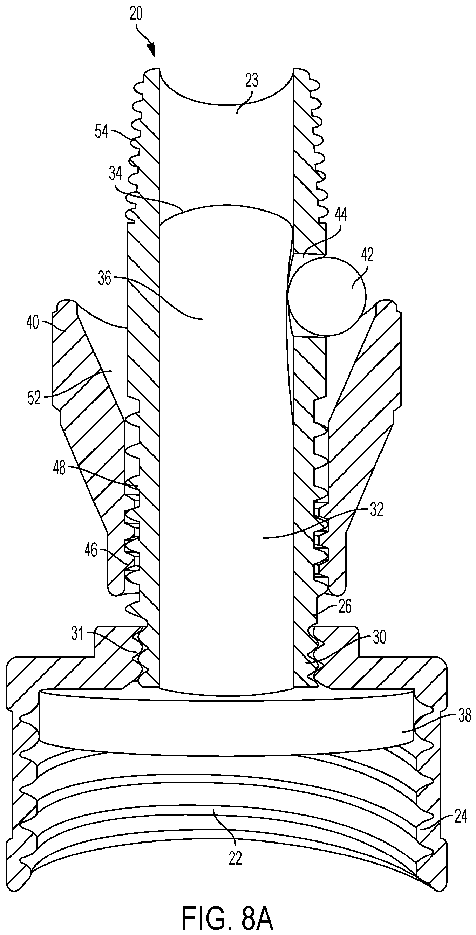

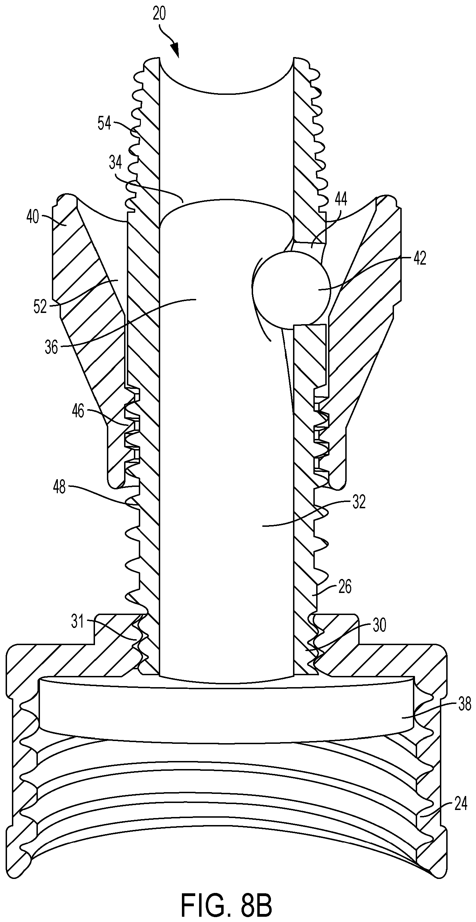

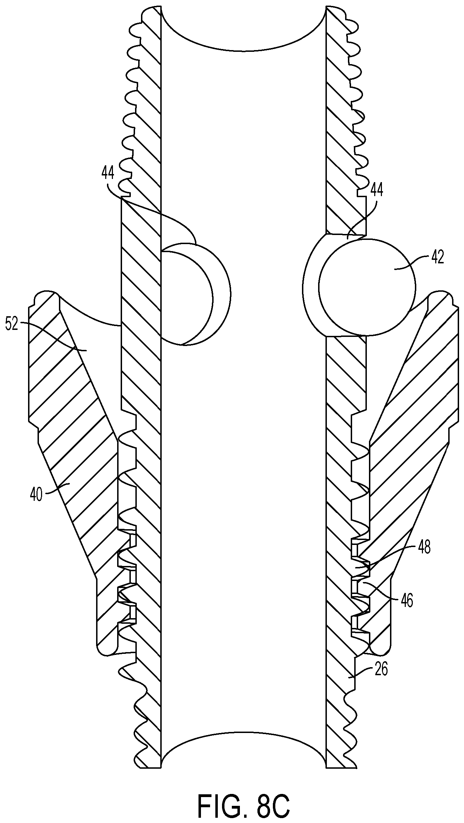

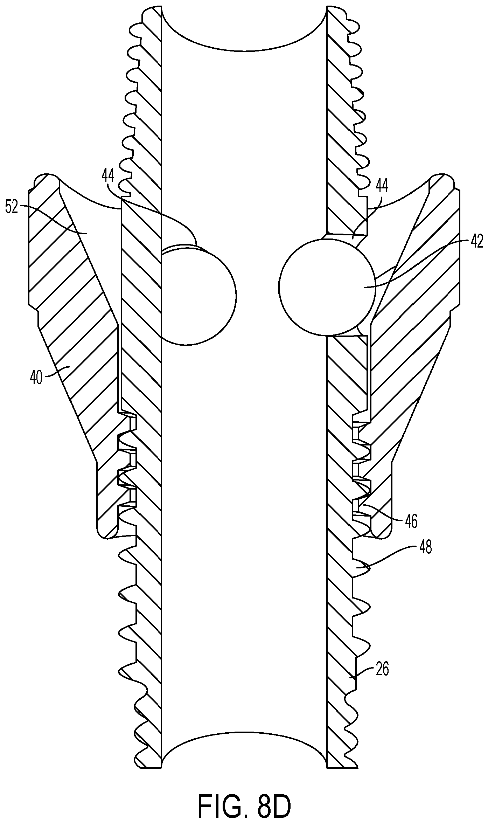

FIG. 8A is a cross-sectional view of an example, not part of the present invention, of a flow control valve that does not have a seating ring and with only one ball installed for clarity, with the flow control valve in an open configuration. FIG. 8B is a cross-sectional view thereof, with the flow control valve in a closed configuration. FIG. 8C is a cross-sectional view thereof in an open configuration with the tubular member omitted for clarity and only one ball installed. FIG. 8D is a cross-sectional view of the example of FIG. 8C in the closed configuration.

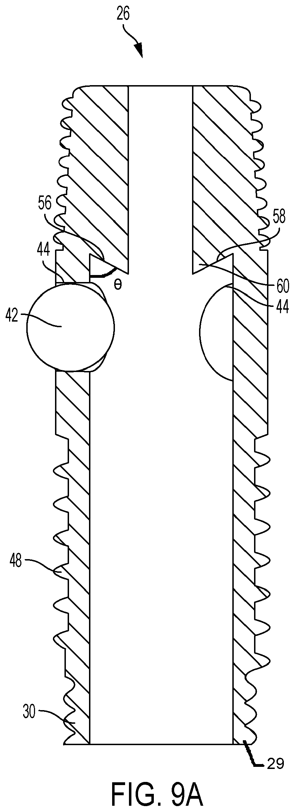

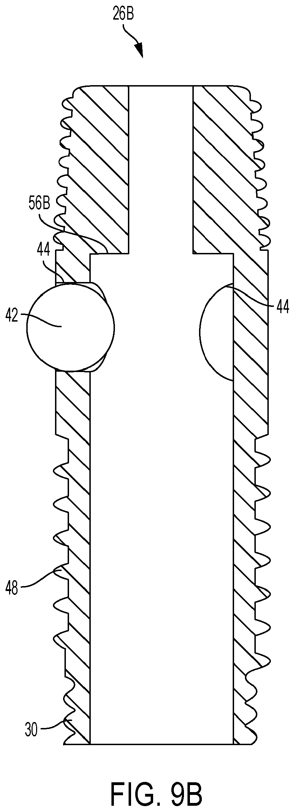

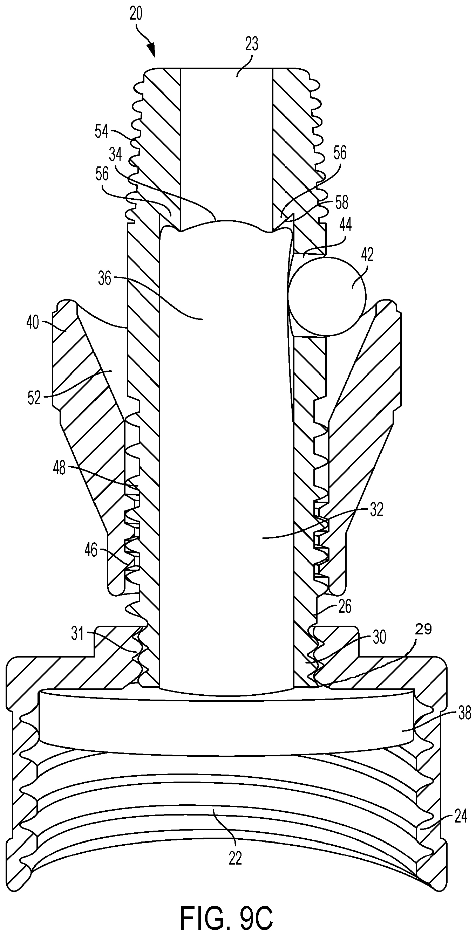

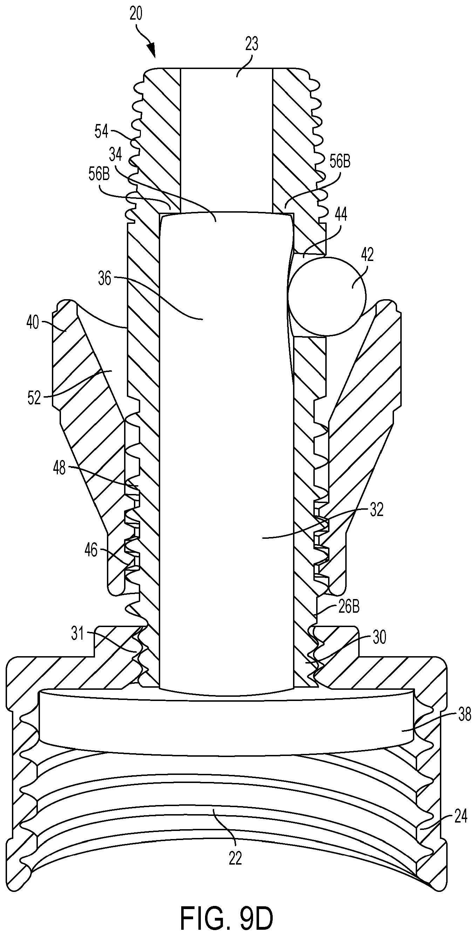

FIG. 9A is a cross-sectional view showing a central shaft having a seating ring. In the illustrated embodiment of FIG. 9A, the seating ring comprises an angled surface. FIG. 9B is a cross-sectional view showing an alternative embodiment of a central shaft having a seating ring that comprises a flat planar surface. FIG. 9C is a cross sectional view showing a flow control valve having a seating ring that comprises an angled surface, with the tubular member engaged against the seating ring when the flow control valve is in the open configuration. FIG. 9D is a cross-sectional view showing a flow control valve having a seating ring that comprises a generally flat planar surface, with the tubular member engaged against the seating ring when the flow control valve is in the open configuration.

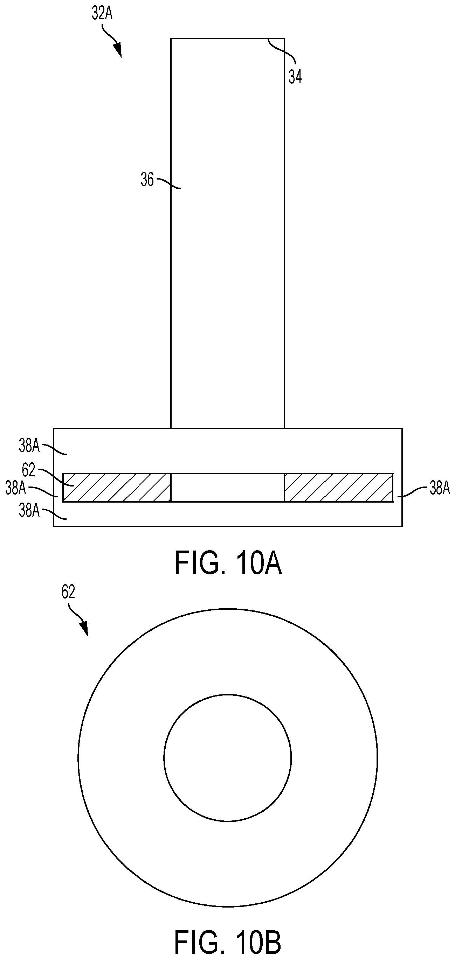

FIG. 10A is a cross-sectional view of an example embodiment of a tubular member having an integral stiffening ring. FIG. 10B is a top view of the integral stiffening ring of FIG. 10A.

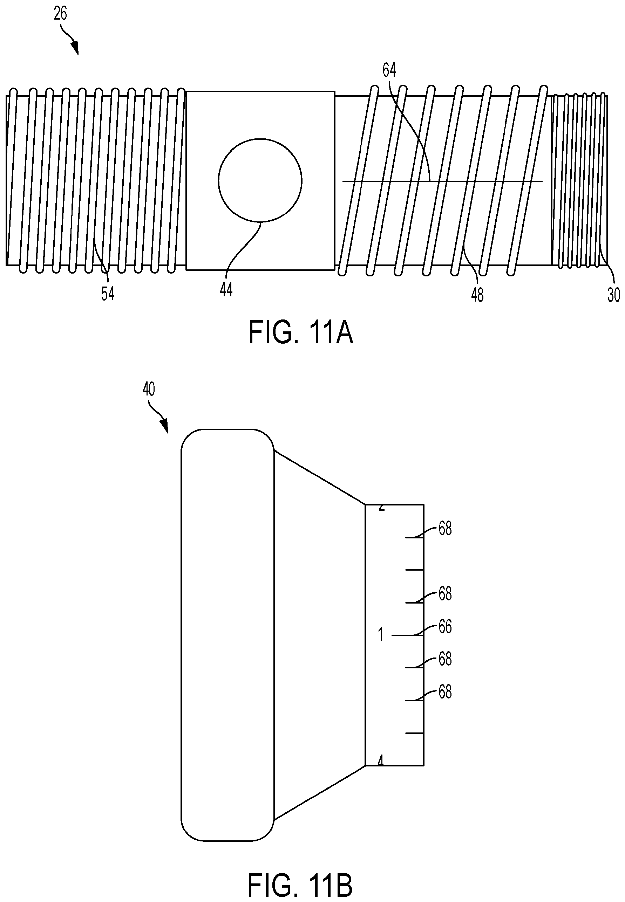

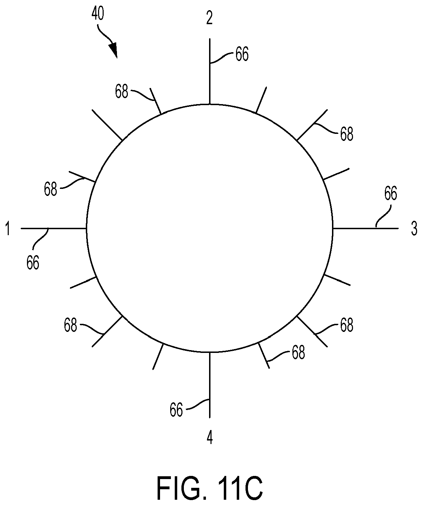

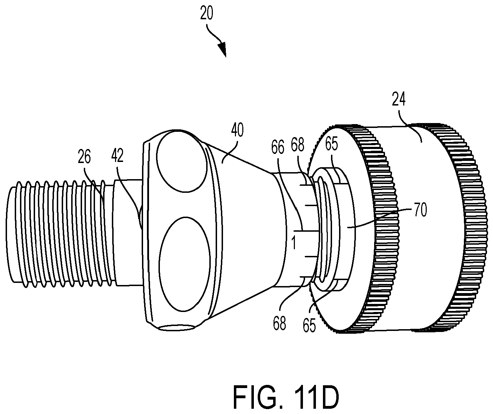

FIG. 11A is a side view of an example embodiment of a central shaft having measuring markings thereon. FIG. 11B is a side view of an example embodiment of a bell housing having measuring markings thereon. FIG. 11C is a schematic view of the downstream end of the bell housing of FIG. 11B, showing schematically how the measuring markings are indicated sequentially thereon in one example embodiment. FIG. 11D is a side view of an alternative example embodiment in which measuring markings are marked on a shoulder of the inlet coupler instead of on the central shaft.

### Description

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense.

As used herein, the terms "upstream" and "downstream" are used as relative directional terms with reference to the direction of fluid flow through a flow control valve. Fluid, which is water in some embodiments, enters the flow control valve through its upstream end, and travels through the flow control valve, exiting at the downstream end of the flow control valve.

As used herein, the terms "radially inwardly" and "radially outwardly" are used as relative directional terms with reference to a notional central axis of the central shaft of the flow control valve. "Radially inwardly" means in a direction towards the notional longitudinal axis of the central shaft of the flow control valve, and "radially outwardly" means in a direction away from that notional longitudinal axis.

As shown in FIG. 1, in one example embodiment, a flow control valve **20** has a fluid inlet **22** at its upstream end, a fluid outlet **23** at its downstream end, a central shaft **26**, and a flow controller **28** in operative engagement with central shaft **26** to control the flow of fluid therethrough.

In the illustrated embodiment, the fluid inlet **22** is provided by a female garden hose coupling **24.** This allows flow control valve **20** to be coupled to the correspondingly threaded male end of a conventional garden hose to provide a source of fluid flow (e.g. water) to fluid inlet **22.** In alternative embodiments, any suitable fluid connector or adapter could be used to provide fluid inlet **22**, having regard to the source of fluid to be used in any given circumstance, including in high pressure applications.

Fluid inlet **22** is coupled to central shaft **26** in any suitable manner. With reference to FIG. 2A, in the illustrated embodiment, central shaft **26** includes a threaded surface **30** at its upstream end. Threaded surface **30** is engaged with a correspondingly threaded surface on fluid inlet **22**, for example a correspondingly threaded surface provided on the downstream side of female garden hose coupler **24**, visible as threaded surface **31** in FIGs. 8A and 8B. A washer **27** is provided at the junction of central shaft **26** and female garden hose coupler **24** as an anti-seize washer to ensure mobility when flow control valve **20** is in the fully open configuration, i.e. when bell housing **40** is in its fully upstream position in the illustrated embodiment. In alternative embodiments, other mechanisms could be used to couple fluid inlet **22** to central shaft **26**, fluid inlet **22** could be integrally formed with central shaft **26**, or the like.

FIGs. 2C and 2D show bottom and top views, respectively of the central shaft of FIG. 2A. The increased thickness of central shaft **26** when viewed from the top as in FIG. 2D arises from the presence of seating ring **56** therein, as described below.

A tubular member **32** (visible in FIG. 3D by virtue of omission of the seating ring from the illustrated embodiment, and shown in detail in FIGs. 4A, 4B, 4C and 4D) sits inside of central shaft **26**, and is in fluid communication with both fluid inlet **22** and fluid outlet **23.**

Fluid flows through tubular member **32** through a fluid path **33** defined by the inner surface of tubular member **32**, and the rate of flow of fluid through tubular member **32** is regulated by flow controller **28** as described in more detail below. In the illustrated embodiment, tubular member **32** has a downstream tip **34**, a central portion **36**, and an integral washer **38** at its upstream end. In the illustrated embodiment, integral washer **38** sits inside of female garden hose coupler **24**, and ensures a good seal between an inlet male end of a garden hose and female garden hose coupler **24.** In alternative examples, not part of the present invention, washer **38** could be formed as a separate component and coupled to the central portion **36** of tubular member **32** in any suitable manner.

In the illustrated embodiment, tubular member **32** is sized to fit sealingly within central shaft **26.** The length of central portion **36** of tubular member **32** between the upper edge of integral washer **38** and the downstream tip **34** of tubular member **32** is just slightly longer than the corresponding length from the base **29** of central shaft **26** to seating ring **56**, so that the downstream tip **34** of tubular member **32** is pressed into and maintains sealing engagement with seating ring **56** by virtue of the engagement of integral washer **38** against female garden hose coupler **24.**

With reference in particular to FIG. 3A-3F and also FIGS. 7A-7D described below, flow controller **28** operates to control flow by adjusting the cross-sectional area of fluid path **33**, based on principles similar to those described in U.S. Patent No. 3,550,861 to Teson. Flow controller **28** comprises a bell housing **40** and a plurality of balls **42** spaced apart circumferentially within the bell housing **40.** In the illustrated embodiment, three balls **42** are used. However, in alternative embodiments, the number of balls **42** used could be varied, so long as balls **42** can be moved outwardly or inwardly relative to one another to increase or decrease, respectively, the cross-sectional surface area of fluid path **33** as described below.

Balls **42** are seated within apertures **44** (FIG. 2A) provided on central shaft **26** in a manner that permits balls **42** to move radially inwardly or outwardly in response to pressure applied by bell housing **40** as described below. The diameter of apertures **44** is just slightly larger than the diameter of balls **42,** so that balls **42** can move radially inwardly or radially outwardly within apertures **44,** but do not move to an appreciable extent in longitudinal or circumferential directions relative to central shaft **26.** Balls **42** are also in contact with the radially outward surface of central portion **36** of tubular member **32,** so that radially inward motion of balls **42** causes compression of tubular member **32** in the radially inward direction, thereby narrowing the cross-sectional area of fluid path **33,** e.g. as shown in FIG. 3E.

To prevent balls **42** from moving too far radially inwardly and thereby potentially moving longitudinally out of apertures **44,** in some embodiments, the diameter of balls **42** (and consequently the corresponding diameter of apertures **44**) is larger than the largest possible diameter of fluid path **33** defined by the inside surface of tubular member **32.** In this way, given that balls **42** will come into contact with one another as they move inwardly inside central shaft **26,** balls **42** prevent one another from moving too far radially inwardly so as to be displaced from apertures **44.**

Balls **42** are held in place within apertures **44** by contact with the outer surface of tubular member **32,** by the circumferential edges of apertures **44,** and by contact with the inner surface of bell housing **40,** as described in greater detail below. Bell housing **40** is provided with a threaded surface **46** on the inside surface of its upstream end **47,** for engagement with a correspondingly threaded surface **48** provided on the outside surface of central shaft **26.**

With reference to FIGs. 5A, 5B, 5C and 5D, bell housing **40** also has a downstream body portion **50** that, in the illustrated embodiment, flares radially outwardly in the downstream direction. The shape of the outer surface of bell housing **40** can be varied in alternative embodiments. The inner surface **52** (referred to hereafter as internal camming surface **52**) of downstream body portion **50** flares radially outwardly in the downstream direction, so that internal camming surface **52** provides a generally conical surface that tapers radially outwardly in the downstream direction. Internal camming surface **52** is in contact with the outside edges of balls **42.** As internal camming surface **52** moves longitudinally relative to central shaft **26** (and therefore relative to balls **42**), the extent to which balls **42** are forced radially inwardly into fluid path **33** is varied.

More specifically, when bell housing **40** is in its fully upstream position, e.g. as shown in FIGs. 3A and 3D, balls **42** are at their radially outwardmost position, and fluid path **33** is fully or relatively unobstructed. Thus, flow control valve **20** is in its fully open position. As bell housing **40** is moved longitudinally downstream via rotational movement about threads **46, 48,** the diameter of the portion of internal camming surface **52** that is in contact with the outside edges of balls **42** is decreased, which forces balls **42** to move radially inwardly inside central shaft **26,** thereby decreasing the cross-sectional surface area of fluid path **33,** e.g. as shown in FIGs. 3B and 3E. When bell housing **40** is placed in its fully downstream longitudinal position, balls **42** are forced radially inwardly to the fullest extent possible, resulting in fluid path **33** being fully closed to fluid flow (i.e. so that there is no flow of liquid through the flow control valve), e.g. as shown in FIGs. 3C and 3F.

Longitudinal movement of bell housing **40** in the upstream direction relative to central shaft **26** causes the opposite effect, i.e. the diameter of the portion of internal camming surface **52** that is in contact with the outside edges of balls **42** is increased, so that balls **42** can move radially outwardly within apertures **44** due to the force applied by tubular member **32** (and/or the fluid flowing through fluid path **33**).

In the illustrated embodiment, bell housing **40** is longitudinally movable with respect to central shaft **26** by virtue of the engagement of correspondingly threaded surfaces **46** (of bell housing **40**) and **48** (of central shaft **26**). Relative rotational movement of bell housing **40** by a user causes bell housing **40** to move longitudinally in either the upstream or downstream direction with respect to central shaft **26.** Because a relatively large degree of relative rotation of bell housing **40** about central shaft **26** produces only a small change in the longitudinal position of bell housing **40** relative to central shaft **26,** very fine control of the cross-sectional area of fluid path **33** is provided, which in turn provides very fine control of the rate of fluid flow through flow control valve **20.**

In alternative embodiments, other methods for moving bell housing **40** longitudinally relative to central shaft **26** could be used to control the movement of internal camming surface **52** against balls **42.** Also in alternative embodiments, internal camming surface **52** need not have a substantially linear shape as illustrated, but could be provided with other shapes, e.g. slightly curved, so long as internal camming surface **52** can be longitudinally moved to vary the radial position of balls **42.**

It will be apparent to those skilled in the art that the relative upstream and downstream orientation of the threaded surface **46** and camming surface **52** could be reversed in alternative embodiments, provided that threaded surface **48** is provided on central shaft **26** downstream of apertures **44** in such embodiments. That is, the orientation of bell housing **40** with respect to central shaft **26** could be reversed by 180° in alternative embodiments. In further alternative embodiments, the relative orientation of internal camming surface **52** could be reversed by 180°, i.e. so that the diameter of internal camming surface **52** that is in contact with balls **42** is smallest when bell housing **40** is in the fully upstream position, and is largest when bell housing **40** is in the fully downstream position. What is important is that bell housing **40** can in some manner be moved in a longitudinal direction relative to central shaft **26,** and that bell housing **40** have an internal camming surface, so that longitudinal movement of bell housing **40** relative to central shaft **26** causes balls **42** to move radially inwardly or outwardly, so that the cross-sectional surface area of fluid path **33** is varied.

In the illustrated embodiment, central shaft **26** includes a downstream threaded surface **54** at its downstream end, so that fluid outlet **23** can be coupled to any desired element. For example, in some embodiments, a hydraulic coupler could be threaded onto downstream threaded surface **54,** to couple flow controller **20** to downstream hydraulic equipment or other devices. In alternative embodiments, the downstream end of central shaft **26** could be provided with any desired engagement mechanism to allow flow control valve **20** to be coupled to any desired piece of equipment.

In the illustrated embodiment, threads **30, 48** and **54** are drawn as reverse threads. In alternative embodiments, threads **30, 48** and **54** could independently alternatively be standard threads. In one example embodiment, threads **30** and **54** are standard threads, while threads **48** are reverse threads. In some such embodiments, if bell housing **40** seizes up (i.e. becomes stuck and difficult to move along threads **48**), the fact that threads **48** are reverse threads while threads **30** and **54** are standard threads allows a user to apply significant force against bell housing **40** to dislodge bell housing **40** for free movement along threads **48,** without a risk of inadvertently uncoupling the garden hose or other upstream source of supply water or any downstream tool to which flow control valve **20** is coupled via threads **30** or **54.**

Because flow control valve **20** is coupled to a downstream device or other piece of equipment into which fluid is fed, a backpressure is generated within fluid path **33.** To prevent this backpressure from causing fluid to leak out of flow control valve **20,** in some embodiments, central shaft **26** is configured to provide a seating ring **56** (e.g. FIG. 2B) against which the downstream tip **34** of tubular member **32** can seal. In the illustrated embodiment of FIG. 2B, seating ring **56** holds tubular member **32** (not shown in FIG. 2B) in place and creates a pressure contact seal to prevent leakage caused by backpressure when connected to a coupler or shut-off device downstream, as best shown in FIGs. 9C and 9D. As bell housing **40** moves longitudinally downstream along central shaft **26,** tubular member **32** is compressed, and forms an even tighter seal against seating ring **56.** In some embodiments, a sealant such as silicone or other suitable material is applied to seating ring **56** where it contacts downstream tip **34** or tubular member **32,** to enhance the seal formed between these components. In some embodiments, a bead of a sealant such as silicone or other material can provide seating ring **56.**

In the illustrated embodiment of FIG. 2B and shown in FIG. 9A, seating ring **56** comprises an angled surface **58.** Angled surface **58** is angled inwardly in the upstream direction by an angle **θ** from the inner surface of central shaft **26** to form a projection **60.** The central shaft **26** shown in FIG. 9A has a constant cross section about its diameter, i.e. angled surface **58** is provided as a fully revolved feature having a circular shape about the inside surface of shaft **26,** so that the circular downstream tip 34 of tubular member **32** can be pushed into contact with angled surface **58.** Angled surface **58** helps to both hold downstream tip **34** of tubular member **32** in place (e.g. to prevent radially inwardly deflection and/or deformation of downstream tip **34** that might otherwise occur by reason of the radially inward force applied by balls **42** as flow control valve **20** is closed), and to ensure a good seal between downstream tip **34** and seating ring **56.** Thus, in some embodiments, the downstream tip **34** of tubular member **32** is engaged over projection **60,** as shown in FIG. 9C.

In alternative embodiments, as shown for example in FIG. 9B, angled surface **58** and projection **60** could be omitted, and seating ring **56** could simply comprise a generally flat radially extending surface for contacting downstream tip **34** of tubular member **32.** This is illustrated as central shaft **26B** having a generally flat, radially inwardly extending seating ring **56B** in FIG. 9B, and could also be regarded as an embodiment in which angle **θ** is 90°.

Ranges of angles **θ** that can be used to provide angled surface **58** of seating ring **56** vary from about 30° to just under 90°, including any value therebetween e.g. 35°, 40°, 45°, 50°, 55°, 60°, 65°, 70°, 75°, 76°, 77°, 78°, 79°, 80°, 80.5°, 81°, 81.5°, 82°, 82.5°, 83°, 83.5°, 84°, 84.5°, 85°, 85.5°, 86°, 86.5°, 87°, 87.5°, 88°, 88.5°, 89°, 89.5°, or just under 90°. In one example embodiment constructed and tested by the inventor, angle **θ** is approximately 85°.

As illustrated in FIGs. 9A and 9B, in one example embodiment, to provide a seating ring **56** or **56B,** the interior diameter of the downstream portion of central shaft **26** would be reduced so that seating ring **56** or **56B** is provided on the interior surface of central shaft **26** at a location to contact downstream tip **34** of tubular member **32,** as shown in FIGS. 9C and 9D. In some such embodiments, seating ring **56** is provided with an angled surface **58** to provide a projection **60,** as described above, so that the downstream tip **34** of tubular member **32** is fitted over the seating ring **58,** as shown in FIG. 9C.

In alternative embodiments, seating ring **56** or **56B** could be provided as other than an integrally formed component of central shaft **26.** For example, in some embodiments, a seating member is separately formed from a suitable material and adhered to the inside surface of central shaft **26** to provide seating ring **56** or **56B.** What is important is that seating ring **56** or **56B** provide a sealing barrier to prevent fluid escaping between downstream tip 34 of tubular member **32** and central shaft **26.**

For example, the inventor has created prototypes that use a silicone seal provided on the inside surface of central shaft **26** to provide seating ring **56.** Such prototypes have been shown to prevent leakage for at least six months in field testing, and could handle pressures of up to about 75 psi (5atm) without failure. Such prototypes in which a silicone seal is used to provide the seating ring also do not include angled surface **58** or projection **60** on the seating ring. Similarly, prototypes constructed by the inventor and having a flat seating ring **56B** (i.e. an example embodiment in which angle **θ** is approximately 90°) have similarly been found to be capable of handling pressures up to about 75 psi (5atm) without failure. Thus, angled surface **58** and/or projection **60** can be omitted in some embodiments.

The inventor has produced prototypes in accordance with the example embodiment illustrated in FIG. 9A that include angled surface **58** and have an angle **θ** of approximately 85° that have allowed directional flow of fluids through the valve to be reversed without any adverse effect or bearing bleed at pressures in excess of 200 psi (13.6 atm) in preliminary testing, and without failure even up to pressures of 2500 psi (170 atm).

In the illustrated embodiment of FIGs. 9C and 9D, the upstream end of tubular member 32 is securely and sealingly held in place by the engagement of integral washer **38** of tubular member **32** between female garden hose coupler **24** and the male end of a garden hose to which flow control valve **20** can be attached. Thus, in use, the upstream end of tubular member **32** is also secured in position and sealed so as to avoid leakage of fluid from flow control valve **20.** In some embodiments, securing the upstream end of tubular member **32** also assists to ensure that a good seal is maintained between downstream tip **34** of tubular member **32** and seating ring **56,** for example by helping to keep tubular member **32** from being displaced by forces applied by balls **42.**

The inventor has found that it is important to ensure that balls **42** are placed a sufficient distance upstream from the downstream tip **34** of tubular member **32,** to ensure that when balls **42** compress tubular member **32** inwardly to narrow fluid path **33,** downstream tip **34** does not thereby get moved out of contact with seating ring **56** or **56B.** Moving balls **42** even as little as two millimeters upstream from seating ring **56** has been found to make a significant difference in the resistance of some tested example embodiments to backpressure.

With reference to FIGs. 8A, 8B, 8C and 8D, an example of a flow control valve **20** is illustrated. In the example shown in these figures, the central shaft **26** does not include a seating ring **56** to assist in more clearly showing the operation of flow control valve **20.** Otherwise, the components of central shaft **26** are the same, and like reference numerals will be used to refer to like parts of central shaft **26.** Only one ball **42** is illustrated in FIGS. 8A-8B for clarity in showing the movement of tubular member **32.**

With reference to FIGs. 6A-6C and 8A-8D, the longitudinal movement of bell housing **40** with respect to central shaft **26** can be clearly seen. In FIGs. 6A and 8A, flow control valve **20** is in its fully open configuration, and bell housing **40** is at its farthest upstream point of travel longitudinally with respect to central shaft **26.** Balls **42** are at their radially outwardmost position.

As the bell housing **40** is rotated along threads **46, 48,** bell housing **40** moves longitudinally in the downstream direction with respect to central shaft **26** (e.g. FIG. 6B). The diameter of the portion of internal camming surface **52** that is in contact with the outside edge of balls **42** progressively decreases as bell housing **40** moves longitudinally in the downstream direction, until flow control valve **20** is placed in the fully closed configuration, at which point bell housing **40** is positioned at its farthest longitudinally downstream position relative to central shaft **26** (e.g. FIGs. 6C and 8B). In this position, balls **42** are at their radially most inward position. As shown in FIG. 8B, radially inward movement of balls **42** deflects tubular member **32** inwardly at the point of contact with the inside edges of balls **42,** causing the cross-sectional surface area of the fluid path 33 defined by the inside circumference of tubular member **32** to be decreased.

The radial movement of balls **42** is shown more clearly in FIGs. 8C and 8D, in which tubular member **32** has been omitted for clarity. In FIG. 8C, flow control valve **20** is in its fully open configuration, balls **42** are at their radially outwardmost positions against internal camming surface **52.** In FIG. 8D, bell housing **40** has been moved longitudinally relative to central shaft **26** to its farthest downstream position so that flow control valve **20** is in its fully closed position, and balls **42** are now at their radially inwardmost position against internal camming surface **52.**

The progressive decrease in the cross-sectional area of fluid path **33** is best shown in FIGs. 7A, 7B, 7C and 7D. As shown in FIG. 7A, when flow control valve **20** is in the open configuration, and balls **42** are at their radially outwardmost position, fluid path **33** has a relatively large cross-sectional area. As bell housing **40** is moved longitudinally relative to central shaft **26** to cause internal camming surface **52** to move balls **42** radially inwardly, the cross-sectional area of fluid path **33** is decreased, as shown in FIG. 7B. FIG. 7C shows the effect of continued movement of bell housing **40,** and also illustrates the high degree of control of the cross-sectional area of fluid path **33** that can be achieved by fluid control valve **20,** because a relatively large amount of rotational movement of bell housing **40** about threads **46, 48** yields only a small degree of change in the longitudinal position of bell housing **40** relative to central shaft **26,** allowing for very fine control of the longitudinal position of bell housing **40,** and hence of the cross-sectional area of fluid path **33.** In FIG. 7C, fluid path **33** has been reduced to a barely visible channel, that allows very small amounts of water to be fed through flow control valve **20.** In FIG. 7D, fluid path **33** has been completed closed off by the radially inward movement of balls **42,** so that flow control valve **20** is in its fully closed position, and will allow no fluid to pass.

A stiffening ring is provided to stiffen integral washer **38** of tubular member **32.** With reference to FIGS. 10A and 10B, tubular member **32A** is illustrated, which has an integral stiffening ring **62** provided within integral washer **38A** thereof. In some embodiments, stiffening ring **62** is formed as an overmold of a relatively more rigid material on tubular member **32A.** However, stiffening ring **62** can be provided as a separate component in alternative embodiments. Additionally, stiffening ring **62** need not be provided within integral washer **38A,** but for example could be securely adhered to integral washer **38** in alternative embodiments. Stiffening ring **62** helps to prevent tubular member **32** from backing out of seating ring **56,** and can also help to ensure good contact of washer **38** and thus a good seal at female garden hose coupler **24.**

In some embodiments, markings are provided on central shaft **26** and bell housing **40** or on any available visible surface to assist a user in achieving a particular rate of fluid flow through flow control valve **20.** With reference to FIG. 11A, in one example embodiment, three longitudinally extending lines **64** are marked along the outer surface of central shaft **26.** In some embodiments, as shown in FIG. 11A, the three longitudinally extending lines **64** are scored into the outer surface of central shaft **26,** although any suitable means of marking could be used. In alternative embodiments, other numbers of longitudinally extending marking lines **64** could be used, e.g. one or two, or more than three. In some embodiments, three longitudinally extending marking lines **64** are easier to see than a single line, for example because in some operating positions a user might be looking at the side of central shaft **26** that is opposite to the position of a single longitudinally extending marking line **64.** In some embodiments, the longitudinally extending marking lines **64** are circumferentially equally spaced about the outside surface of central shaft **26.**

In some embodiments, a plurality of dashed markings are provided on the outside surface of bell housing **40.** In some such embodiments, the plurality of dashed markings are provided at the upstream end of bell housing **40,** as illustrated in FIG. 11B. In some embodiments, the plurality of dashed markings are scored into the outside surface of bell housing **40,** although any suitable means of marking could be used. In some embodiments, including the illustrated embodiment, the plurality of dashed markings are differentiated, for example by having one longer marking **66** interposed by one or a plurality of shorter markings **68.** In some embodiments, the plurality of dashed markings **66, 68** are sequentially numbered. In some embodiments, including the illustrated embodiment, only the longer markings **66** of the plurality of dashed markings are numbered.

For example, as shown in FIG. 11B and schematically in FIG. 11C, four longer markings **66** are provided on bell housing **40,** and are equally circumferentially spaced around the upstream end of bell housing **40.** Each one of the four longer markings **66** is sequentially numbered circumferentially, i.e. each longer marking **66** would be physically labelled as 1, 2, 3 and 4, respectively, on the bell housing **40.** Three shorter markings **68** are provided between each adjacent pair of longer markings **66,** and shorter markings **68** are likewise equally circumferentially spaced apart from each other and from longer markings **66.**

To read the markings, according to one example, the user can count the number of threads visible along central shaft **26** between female garden hose coupler **24** and the upstream edge of bell housing **40** along the most easily viewed longitudinally extending marking line **64** on central shaft **26.** In one example embodiment, there could be a maximum of four such threads visible when bell housing **40** is at its farthest downstream position. The markings **66, 68** on bell housing **40** indicate the setting relative to the most easily viewed longitudinally extending marking line **64** on central shaft **26.** In one hypothetical example embodiment, there are five long dashed markings **66** about the circumference of bell housing **40,** with four short markings **68** between each adjacent pair of long dashed markings **66.** In one such embodiment, the user counts the number of threads visible on central shaft **26** (e.g. 3), the sequential number indicated by the long dashed marking **66** (e.g. 2), and the number of short marks **68** to the most easily viewed longitudinally extending marking line **64** on central shaft **26** (e.g. 4) to count the flow rate. In this specific example, the flow rate setting would be 3-2/4 (i.e. 3 threads, long dashed marking 2, plus four short marks). This allows a user to easily set flow control valve **20** to a particular flow rate, adjust if necessary at a particular point in time, and then accurately return to the original flow rate setting when it is desired to do so.

As shown in FIG. 11D, in some embodiments instead of longitudinally extending marking lines **64** being marked on central shaft **26,** one or more longitudinally extending marking lines **65** are marked on a shoulder **70** of inlet coupler **24,** which may potentially increase the visibility of such marking lines if the threading **48** on central shaft **26** becomes dirty. The position of the longitudinally extending marking lines **65** on shoulder **70** can be used in the same manner as described above for longitudinally extending marking lines **64** to easily set flow control valve **20** to a particular flow rate. In alternative embodiments, longitudinally extending marking lines **65** could be provided on any visible portion of inlet coupler **24.**

Suitable materials for the manufacture of various components of flow control valve **20** can be determined by those skilled in the art. For example, brass or other suitable metal can be used to fabricate central shaft **26,** female garden hose coupler **24,** and bell housing **40.** Any suitably rigid material, including e.g. metal or plastic, can be used for balls **42.** Any suitable type of flexible material (e.g. rubber or soft plastic) can be used to provide tubular member **32.**

While flow control valve **20** has been described and illustrated as having a generally symmetrical configuration (i.e. with three circumferentially equally spaced balls **42** provided), it will be apparent to those skilled in the art that other numbers of balls **42** and other configurations (e.g. unequal or asymmetrical spacings of balls **42**) could be used in alternative embodiments.

In use, a user can couple fluid inlet **22** to any desired source of fluid, e.g. a male end of a garden hose supplying water. A user can also couple fluid outlet **23** to any desired downstream device or piece of equipment (e.g. a tool for cutting or grinding hard materials), for example by threading a hydraulic coupling onto downstream threaded surface **54.** The source of fluid can then be activated (e.g. the garden hose turned on), to supply fluid to flow control valve **20.** A user can then manually regulate the rate of flow of fluid through flow control valve **20** by rotating bell housing **40** until a desired flow rate is achieved.

For example, in one embodiment, a user couples fluid inlet **22** to a source of fluid, couples fluid outlet **23** to a downstream device, rotates bell housing **40** to its fully downstream position, so that flow control valve **20** is in its fully closed position. A user then turns on the source of fluid, although no fluid is permitted to pass through flow control valve **20.** A user then takes whatever steps are necessary to prepare the downstream device for use, and then, when ready, rotates bell housing **40** to move bell housing **40** longitudinally in the upstream direction with respect to central shaft **26.** This allows fluid to begin flowing through flow control valve **20.** The user continues to rotate bell housing **40** until the desired flow rate is achieved. Once whatever activity that is being carried out is completed, a user can optionally rotate bell housing **40** so that it moves longitudinally in the downstream direction until flow control valve **20** is back in its fully closed position.

While a number of exemplary aspects and embodiments have been discussed above, those of skill in the art will recognize certain modifications, permutations, additions and sub-combinations thereof. It is therefore intended that the following appended claims are interpreted to include all such modifications, permutations, additions and sub-combinations as consistent with the broadest interpretation of the specification as a whole.

## Claims

1. A flow control valve comprising:
a central shaft (26) having a fluid inlet (22) and a fluid outlet (23);
a resilient tubular member (32, 32A) extending through the central shaft (26, 26B), an internal diameter of the resilient tubular member defining a fluid flow path;
a plurality of balls (42) positioned in apertures (44) provided in the central shaft (26, 26B), an inside edge of each one of the balls being in contact with an outside surface of the resilient tubular member;
a bell housing (40) engaged with the central shaft (26, 26B) for longitudinal movement relative to the central shaft (26, 26B), the bell housing (40) having an internal camming surface that is in contact with an outside edge of each one of the balls (42), the internal camming surface being angled outwardly from a first end of the internal camming surface to a second end of the internal camming surface;
so that longitudinal movement of the bell housing (40) relative to the central shaft (26, 26B) in a direction towards the second end of the bell housing (40) causes radially inward movement of each one of the plurality of balls (42) to thereby decrease a cross-sectional area of the fluid flow path,
**characterized in that** the central shaft (26, 26B) comprises a seating ring (56, 56B) on an internal surface of the central shaft (26, 26B), a first end of the resilient tubular member (32) being in sealing engagement with the seating ring (56, 56B), a second end of the resilient tubular member (32, 32A) comprising an integral washer (38, 38A), wherein the integral washer (38A) of the resilient tubular member (32A) comprises a stiffening ring (62).

2. A flow control valve as defined in claim 1, wherein the bell housing (40) is in threaded engagement with the central shaft (26, 26B), so that rotational movement of the bell housing relative to the central shaft (26, 26B) is translated to longitudinal movement of the bell housing (40) relative to the central shaft (26, 26B).

3. A flow control valve as defined in claim 1, wherein the seating ring (56, 56B) comprises a silicone seal.

4. A flow control valve as defined in claim 1, wherein the seating ring (56, 56B) comprises a seal formed of a suitable material and coupled to the inside surface of the central shaft (26).

5. A flow control valve as defined in claim 4, wherein the seating ring (56) comprises an angled surface that tapers radially inwardly and in the upstream direction from an inside surface of the central shaft (26) to provide a projection.

6. A flow control valve as defined in claim 4, wherein an angle θ defined between an inside surface of the central shaft (26) and the angled surface is between 30° and just less than 90°, optionally between about 82° and 88°.

7. A flow control valve as defined in claim 5, wherein the first end of the resilient tubular member (32, 32A) is engaged over the projection.

8. A flow control valve as defined in any one of claims 1 or 4, wherein the seating ring comprises a surface that is generally flat in the radially inward direction.

9. A flow control valve as defined in any one of claims 1 to 8, wherein the seating ring comprises a sealant material at a location where the seating ring contacts the tubular member (32, 32A), and wherein the sealant material optionally comprises silicone.

10. A flow control valve as defined in any one of claims 1 to 9, wherein a diameter of the balls (42) is larger than a diameter of the fluid flow path when the flow control valve is in an open configuration.

11. A flow control valve as defined in any one of claims 1 to 10, wherein the plurality of balls (42) comprises three circumferentially spaced apart balls.

12. A flow control valve as defined in any one claims 1 to 11, comprising markings on both an outer surface of the central shaft (26) and an outer surface of the bell housing (40) for setting a flow rate of the flow control valve to a predetermined level.

13. A flow control valve as defined in claim 1, wherein a downstream end of the central shaft (26) has an engagement mechanism to allow the flow control valve to be coupled to a piece of equipment.

14. A flow control valve as defined in claim 1, wherein the central shaft (26, 26B) includes a downstream threaded surface (54) at its downstream end.

15. A method of using a flow control valve, the method comprising:
providing fluid to a flow control valve (20) as defined in claim 1 and allowing fluid to flow through the fluid path of the flow control valve (20);
moving the bell housing (40) having an internal camming surface longitudinally relative to the central shaft (26) of the flow control valve (20) so that the internal camming surface moves the plurality of balls (42) supported within the central shaft (26) of the flow control valve (20) radially inwardly to decrease a cross-sectional area of the fluid path;
so that a rate of flow of the fluid through the flow control valve (20) is decreased.

## Patentansprüche

1. Strömungsregelventil, umfassend:
eine zentrale Welle (26) mit einem Fluideinlass (22) und einem Fluidauslass (23);
ein elastisches rohrförmiges Element (32, 32A), das sich durch die zentrale Welle (26, 26B) erstreckt, wobei ein Innendurchmesser des elastischen rohrförmigen Elements einen Fluidströmungsweg definiert;
eine Vielzahl an Kugeln (42), die in Öffnungen (44) positioniert sind, die in der zentralen Welle (26, 26B) vorgesehen sind, wobei eine Innenkante einer jeden der Kugeln mit einer Außenfläche des elastischen rohrförmigen Elements in Kontakt steht;
ein Glockengehäuse (40), das mit der zentralen Welle (26, 26B) zur Längsbewegung relativ zur zentralen Welle (26, 26B) in Eingriff steht, wobei das Glockengehäuse (40) eine innere Nockenfläche aufweist, die mit einer Außenkante einer jeden der Kugeln (42) in Kontakt steht, wobei die innere Nockenfläche von einem ersten Ende der inneren Nockenfläche zu einem zweiten Ende der inneren Nockenfläche nach außen abgewinkelt ist;
so dass eine Längsbewegung des Glockengehäuses (40) relativ zur zentralen Welle (26, 26B) in einer Richtung zum zweiten Ende des Glockengehäuses (40) hinführend eine radial nach innen gerichtete Bewegung einer jeden der Vielzahl an Kugeln (42) bewirkt, um dadurch eine Querschnittsfläche des Fluidströmungswegs zu verringern, **dadurch gekennzeichnet, dass** die zentrale Welle (26, 26B) einen Sitzring (56, 56B) auf einer Innenfläche der zentralen Welle (26, 26B) umfasst, wobei sich ein erstes Ende des elastischen rohrförmigen Elements (32) in einem Dichtungseingriff mit dem Sitzring (56, 56B) befindet, wobei ein zweites Ende des elastischen rohrförmigen Elements (32, 32A) eine integrale Unterlegscheibe (38, 38A) umfasst, wobei die integrale Unterlegscheibe (38A) des elastischen rohrförmigen Elements (32A) einen Versteifungsring (62) umfasst.

2. Strömungsregelventil nach Anspruch 1, wobei das Glockengehäuse (40) in Gewindeeingriff mit der zentralen Welle (26, 26B) steht, so dass eine Drehbewegung des Glockengehäuses relativ zur zentralen Welle (26, 26B) in Längsbewegung des Glockengehäuses (40) relativ zur zentralen Welle (26, 26B) übersetzt wird.

3. Strömungsregelventil nach Anspruch 1, wobei der Sitzring (56, 56B) eine Silikondichtung umfasst.

4. Strömungsregelventil nach Anspruch 1, wobei der Sitzring (56, 56B) eine Dichtung umfasst, die aus einem geeigneten Material gebildet und mit der Innenfläche der zentralen Welle (26) gekoppelt ist.

5. Strömungsregelventil nach Anspruch 4, wobei der Sitzring (56) eine abgewinkelte Oberfläche umfasst, die sich radial nach innen und stromaufwärts von einer Innenfläche der zentralen Welle (26) verjüngt, um einen Vorsprung bereitzustellen.

6. Strömungsregelventil nach Anspruch 4, wobei ein Winkel 8, der zwischen einer Innenfläche der zentralen Welle (26) und der abgewinkelten Fläche definiert ist, zwischen 30° und etwas weniger als 90°, optional zwischen etwa 82° und 88°, liegt.

7. Strömungsregelventil nach Anspruch 5, wobei das erste Ende des elastischen rohrförmigen Elements (32, 32A) über dem Vorsprung in Eingriff steht.

8. Strömungsregelventil nach einem der Ansprüche 1 oder 4, wobei der Sitzring eine Oberfläche umfasst, die im Allgemeinen in der radial nach innen gerichteten Richtung flach ist.

9. Strömungsregelventil nach einem der Ansprüche 1 bis 8, wobei der Sitzring ein Dichtungsmaterial an einer Stelle umfasst, an der der Sitzring das rohrförmige Element (32, 32A) berührt, und wobei das Dichtungsmaterial optional Silikon umfasst.

10. Strömungsregelventil nach einem der Ansprüche 1 bis 9, wobei ein Durchmesser der Kugeln (42) größer ist als ein Durchmesser des Fluidströmungsweges, wenn sich das Strömungsregelventil in einer offenen Ausbildung befindet.

11. Strömungsregelventil nach einem der Ansprüche 1 bis 10, wobei die Vielzahl an Kugeln (42) drei in Umfangsrichtung voneinander beabstandete Kugeln umfasst.

12. Strömungsregelventil nach einem der Ansprüche 1 bis 11, umfassend Markierungen sowohl an einer Außenfläche der zentralen Welle (26) als auch an einer Außenfläche des Glockengehäuses (40) zum Einstellen einer Durchflussrate des Strömungsregelventils auf ein vorbestimmtes Niveau.

13. Strömungsregelventil nach Anspruch 1, wobei ein stromabwärtiges Ende der zentralen Welle (26) einen Eingriffsmechanismus aufweist, um zu ermöglichen, dass das Strömungsregelventil mit einem Gerät gekoppelt wird.

14. Strömungsregelventil nach Anspruch 1, wobei die zentrale Welle (26, 26B) an ihrem stromabwärtigen Ende eine stromabwärtige Gewindefläche (54) einschließt.

15. Verfahren zur Verwendung eines Strömungsregelventils, wobei das Verfahren umfasst:
Bereitstellen von Fluid zu einem Strömungsregelventil (20) nach Anspruch 1 und Ermöglichen, dass Fluid durch den Fluidweg des Strömungsregelventils (20) fließt;
Bewegen des Glockengehäuses (40) mit einer inneren Nockenfläche in Längsrichtung relativ zur zentralen Welle (26) des Strömungsregelventils (20), so dass die innere Nockenfläche die Vielzahl an Kugeln (42) bewegt, die in der zentralen Welle (26) des Strömungsregelventils (20) radial nach innen abgestützt sind, um eine Querschnittsfläche des Fluidweges zu verringern;
so dass eine Durchflussmenge des Fluids durch das Strömungsregelventil (20) verringert wird.

## Revendications

1. Soupape de régulation de débit comprenant :
un arbre central (26) comportant une entrée de fluide (22) et une sortie de fluide (23) ;
un élément tubulaire élastique (32, 32A) se prolongeant à travers l'arbre central (26, 26B), un diamètre interne de l'élément tubulaire élastique définissant un trajet d'écoulement de fluide ;
une pluralité de billes (42) positionnées dans des ouvertures (44) prévues dans l'arbre central (26, 26B), un bord intérieur de chacune des billes étant en contact avec une surface extérieure de l'élément tubulaire élastique ;
un logement en cloche (40) se mettant en prise avec l'arbre central (26, 26B) pour un mouvement longitudinal par rapport à l'arbre central (26, 26B), le logement en cloche (40) comportant une surface de came interne étant en contact avec un bord extérieur de chacune des billes (42), la surface de came interne étant orientée vers l'extérieur à partir d'une première extrémité de la surface de came interne vers une seconde extrémité de la surface de came interne ;
de sorte que le mouvement longitudinal du logement en cloche (40) par rapport à l'arbre central (26, 26B) dans une direction vers la seconde extrémité du logement en cloche (40) provoque un mouvement radialement intérieur de chacune des billes de la pluralité de billes (42) pour ainsi diminuer une surface de section transversale du trajet d'écoulement du fluide, **caractérisée en ce que** l'arbre central (26, 26B) comprend une bague de siège (56, 56B) sur une surface interne de l'arbre central (26, 26B), une première extrémité de l'élément tubulaire élastique (32) se mettant en prise de façon étanche avec la bague de siège (56, 56B), une seconde extrémité de l'élément tubulaire élastique (32, 32A) comprenant une rondelle solidaire (38, 38A), dans laquelle la rondelle solidaire (38A) de l'élément tubulaire élastique (32A) comprend une bague de renforcement (62).

2. Soupape de régulation de débit selon la revendication 1, dans laquelle le logement en cloche (40) est en engagement fileté avec l'arbre central (26, 26B), de sorte que le mouvement de rotation du logement en cloche par rapport à l'arbre central (26, 26B) est converti en un mouvement longitudinal du logement en cloche (40) par rapport à l'arbre central (26, 26B).

3. Soupape de régulation de débit selon la revendication 1, dans laquelle la bague de siège (56, 56B) comprend un joint en silicone.

4. Soupape de régulation de débit selon la revendication 1, dans laquelle la bague de siège (56, 56B) comprend un joint formé d'un matériau approprié et couplé à la surface intérieure de l'arbre central (26).

5. Soupape de régulation de débit selon la revendication 4, dans laquelle la bague de siège (56) comprend une surface angulaire qui se rétrécit radialement vers l'intérieur et dans la direction en amont à partir d'une surface intérieure de l'arbre central (26) pour fournir une saillie.

6. Soupape de régulation de débit selon la revendication 4, dans laquelle un angle défini entre une surface intérieure de l'arbre central (26) et la surface angulaire est compris entre 30 et un peu moins de 90°, optionnellement entre environ 82 et 88°.

7. Soupape de régulation de débit selon la revendication 5, dans laquelle la première extrémité de l'élément tubulaire élastique (32, 32A) se met en prise sur la saillie.

8. Soupape de régulation de débit selon l'une quelconque des revendications 1 ou 4, dans laquelle la bague de siège comprend une surface étant généralement plate dans la direction radialement vers l'intérieur.

9. Soupape de régulation de débit selon l'une quelconque des revendications 1 à 8, dans laquelle la bague de siège comprend un matériau d'étanchéité à un emplacement où la bague de siège est en contact avec l'élément tubulaire (32, 32A), et dans laquelle le matériau d'étanchéité comprend optionnellement de la silicone.

10. Soupape de régulation de débit selon l'une quelconque des revendications 1 à 9, dans laquelle un diamètre des billes (42) est supérieur à un diamètre du trajet d'écoulement du fluide lorsque la soupape de régulation de débit se trouve dans une configuration d'ouverture.

11. Soupape de régulation de débit selon l'une quelconque des revendications 1 à 10, dans laquelle la pluralité de billes (42) comprend trois billes espacées circonférentiellement.

12. Soupape de régulation de débit selon l'une quelconque des revendications 1 à 11, comprenant des marquages à la fois sur une surface extérieure de l'arbre central (26) et sur une surface extérieure du logement en cloche (40) pour régler un débit de la soupape de régulation de débit à un niveau prédéterminé.

13. Soupape de régulation de débit selon la revendication 1, dans laquelle une extrémité en aval de l'arbre central (26) comporte un mécanisme de mise en prise pour permettre à la soupape de régulation de débit d'être couplée à une pièce d'équipement.

14. Soupape de régulation de débit selon la revendication 1, dans laquelle l'arbre central (26, 26B) inclut une surface filetée (54) en aval à son extrémité en aval.

15. Procédé d'utilisation d'une soupape de régulation de débit, le procédé comprenant :
fournir un fluide à une soupape de régulation de débit (20) selon la revendication 1 et permettre au fluide de s'écouler à travers le trajet fluidique de la soupape de régulation de débit (20) ;
déplacer le corps en cloche (40) comportant une surface de came interne longitudinalement par rapport à l'arbre central (26) de la soupape de régulation de débit (20) de sorte que la surface de came interne déplace la pluralité de billes (42) supportées à l'intérieur de l'arbre central (26) de la soupape de régulation de débit (20) radialement vers l'intérieur pour diminuer une section transversale du trajet fluidique ;
de sorte qu'un débit du fluide à travers la soupape de régulation de débit (20) est diminué.
